# FASCICULE DE BREVET EUROPEEN

(11) **EP 2 791 006 B1**
(45) Date de publication et mention de la délivrance du brevet: **11.01.2017**
(21) Numéro de dépôt: 12810370.2
(22) Date de dépôt: 07.12.2012
(51) Int. Cl.: B64D 33/02, F02C 7/045

(54) **STRUCTURE D'ENTRÉE D'AIR POUR NACELLE DE TURBORÉACTEUR**
LUFTEINLASSSTRUKTUR FÜR EINE TURBOSTRAHL-MOTORENGONDEL
AIR INTAKE STRUCTURE FOR TURBOJET ENGINE NACELLE

(30) Priorité: 15.12.2011 FR 1161658
(43) Date de publication de la demande: 22.10.2014
(73) Titulaire: Aircelle, 76700 Gonfreville l'Orcher (FR)
(72) Inventeur: DEZEUSTRE, Nicolas, F-76600 Le Havre (FR); CARUEL, Pierre, F-76600 Le Havre (FR); GONIDEC, Patrick, F-31530 Bretx (FR); BOILEAU, Patrick, F-31170 Tournefeuille (FR)
(74) Mandataire: Gaillarde, Frédéric F. Ch.
(86) Numéro de dépôt international: PCT/FR2012/052836
(87) Numéro de publication internationale: WO 2013/088033

(56) Documents cités:
- EP-A1- 1 103 462
- EP-B1- 1 893 484
- FR-A1- 2 906 568
- FR-A1- 2 936 777

## Description

La présente invention se rapporte à une structure d'entrée d'air pour nacelle de turboréacteur.

Comme cela est connu en soi, un ensemble propulsif d'aéronef comprend classiquement un turboréacteur logé à l'intérieur d'une nacelle.

La nacelle présente généralement une structure annulaire comprenant une entrée d'air en amont du turboréacteur, une section médiane destinée à entourer une soufflante dudit turboréacteur et son carter, et une section aval destinée à entourer la chambre de combustion du turboréacteur et abritant le cas échéant des moyens d'inversion de poussée. Elle peut être terminée par une tuyère d'éjection dont la sortie est située en aval du turboréacteur.

La structure d'entrée d'air sert à optimiser la captation d'air nécessaire à l'alimentation de la soufflante du turboréacteur et à le canaliser vers cette soufflante.

Une structure d'entrée d'air comprend notamment en amont une structure de bord d'attaque couramment appelée « lèvre » d'entrée d'air.

La lèvre d'entrée d'air assure la captation de l'air et est rattachée au reste de la structure d'entrée d'air qui assure la canalisation de l'air capté vers le turboréacteur.

Pour ce faire, le reste de la structure d'entrée d'air présente une structure sensiblement annulaire comprenant un panneau externe assurant la continuité aérodynamique externe de la nacelle et un panneau interne assurant la continuité aérodynamique interne de la nacelle, notamment avec le carter de soufflante au niveau de la section médiane. La lèvre d'entrée d'air assure la jonction amont entre ces deux parois et peut notamment être intégrée au panneau externe. Elle assure également le dégivrage ou l'antigivrage de la nacelle, par apport de chaleur afin de fondre et évaporer la glace qui peut s'y déposer.

L'ensemble de la structure d'entrée d'air est rattaché en amont de la section médiane de la nacelle (panneau externe) et du carter de soufflante (panneau interne). La reprise des efforts transitant par l'entrée d'air est assurée notamment par une bride de rattachement au carter de soufflante.

La surface interne de la structure d'entrée d'air est exposée à un flux d'air important et est située à proximité des pâles de la soufflante. Elle est donc située dans une zone de bruit important.

Afin de remédier dans la mesure du possible à cette situation et en vue de diminuer la pollution sonore générée par le turboréacteur, le panneau interne de la section d'entrée d'air est équipé d'une structure d'atténuation acoustique.

Cette structure d'atténuation acoustique se présente sous la forme d'un panneau sandwich à âme alvéolaire possédant une peau externe percée, dite peau acoustique, destinée à être exposé au bruit et une peau interne pleine. L'âme alvéolaire constitue ainsi un résonateur apte à piéger les ondes sonores.

La lèvre d'entrée d'air n'est quant à elle pas équipée de structure d'atténuation acoustique pour des raisons structurelles et thermique, et il est donc nécessaire de prévoir des liaisons au niveau de la jonction entre le panneau interne et la lèvre d'entrée d'air. En raison de l'épaisseur de la structure d'atténuation acoustique, cette liaison présente de nombreuses difficultés de réalisation.

Il existe plusieurs possibilités pour assurer la transition entre le panneau interne équipé de la structure d'atténuation acoustique et la lèvre d'entrée d'air.

Tout d'abord, il est possible de prévoir des liaisons au niveau de la peau acoustique entre le panneau interne et la lèvre d'entrée d'air.

Il existe également des solutions avec les peaux acoustique et pleine travaillantes mais les calculs de chemins d'effort et de dimensionnement sont plus complexes.

Dans les solutions classiques, la lèvre d'entrée d'air est réalisée à partir d'une peau non acoustique (pleine) et le panneau interne présente une peau pleine (également appelée « backskin » ou peau arrière) de son panneau acoustique qui est structurale. La liaison s'effectue au moyen d'une manivelle structurale assurant la liaison mécanique et la transmission des efforts entre ladite peau arrière et la lèvre d'entrée d'air malgré le décalage dû à l'épaisseur du panneau acoustique. En raison de ces contraintes géométriques, la manivelle est structuralement délicate à réaliser et impactant donc la masse de l'ensemble. Par ailleurs, elle empêche de prolonger le panneau acoustique et d'étendre ses performances à la structure de lèvre d'entrée d'air.

Il existe donc un besoin pour améliorer la tenue structurale d'une telle structure d'entrée d'air et permettre d'utiliser au moins en partie la zone de lèvre d'entrée d'air pour améliorer les performances acoustiques en l'équipant d'une structure d'atténuation acoustique prolongeant celle de la paroi interne. EP1103462 A1 divulgue les caractéristiques du préambule de la revendication 1.

Pour ce faire, la présente invention se rapporte à une structure d'entrée d'air pour nacelle de turboréacteur comprenant une structure principale sensiblement annulaire présentant une paroi interne et une paroi externe et une structure de lèvre d'entrée d'air reliant en amont lesdites parois externe et interne, une première structure d'atténuation acoustique présentant une peau acoustique percée, une âme alvéolaire, et une peau arrière pleine équipant ledit panneau interne, et une deuxième structure d'atténuation acoustique présentant une architecture similaire équipant une partie de la lèvre d'entrée d'air sensiblement à proximité d'une jonction avec la paroi interne caractérisée en ce que la peau arrière de la première structure acoustique est alignée avec la deuxième structure acoustique, ladite peau arrière étant par ailleurs structurale.

Ainsi en prévoyant que la peau arrière est alignée entre les deux structures d'atténuation acoustique, les passages d'efforts sont grandement facilités et elle assure la tenue structurale pour l'ensemble des structures d'atténuation acoustique de la paroi interne et de l'entrée d'air. La peau acoustique percée correspondant à chacune de ces structures peut être non structurale, et il n'est plus nécessaire de prévoir une manivelle de liaison.

Il s'ensuit un gain de masse ainsi qu'une structure globale simplifiée et la possibilité d'avoir une structure d'atténuation acoustique s'étendant sur le maximum de surface exposée disponible.

Par ailleurs, les peaux acoustiques n'étant pas structurales, elles peuvent être très fines et présenter une épaisseur réduite de quelques dixièmes de millimètre alors qu'une peau structurale assurant des propriétés mécaniques doit présenter une épaisseur suffisante, typiquement de l'ordre du millimètre.

Alors que précédemment, la présence de la manivelle entrainait la perte de propriétés d'absorption acoustiques sur une longueur d'environ 5 cm sur toute la circonférence de l'entrée d'air, la solution selon l'invention permet une jonction bord à bord des structures acoustiques entraînant une perte de zone acoustique minimale de seulement une dizaine de millimètre dans le cas d'un collage non structural entre les structures.

Selon un mode de réalisation particulier préféré, la peau arrière de la première structure acoustique est commune à la deuxième structure acoustique, ladite peau arrière étant par ailleurs structurale.

De manière avantageuse, la lèvre d'entrée d'air est intégrée à la paroi externe.

Préférentiellement, la deuxième structure acoustique se prolonge le long de la structure d'entrée d'air au niveau d'une zone de bord d'attaque à forte courbure de la lèvre d'entrée d'air.

De manière avantageuse, la zone de bord d'attaque, l'épaisseur de la deuxième structure acoustique décroit progressivement.

Avantageusement encore, la deuxième structure d'atténuation acoustique décroit jusqu'à ce que la peau arrière pleine rejoigne une paroi externe de la structure d'entrée d'air.

Préférentiellement, dans la zone de bord d'attaque, l'âme alvéolaire de la deuxième structure acoustique est maintenue à l'aide de plots pour nids d'abeille.

Selon un mode de réalisation préférentiel, dans la zone de bord d'attaque, la deuxième structure acoustique présente une âme alvéolaire discontinue réalisée à partir de plusieurs sections présentant chacune une courbure appropriée.

Alternativement ou de manière complémentaire, la structure d'entrée d'air comprend au moins un gousset structural associé à la peau arrière de la deuxième structure acoustique.

La présente invention se rapporte également à une nacelle de turboréacteur, caractérisée en ce qu'elle comprend une structure d'entrée d'air selon l'invention.

La présente invention sera mieux comprise à la lumière de la description détaillée qui suit en regard du dessin annexé dans lequel :
- la figure 1 est une représentation schématique en coupe longitudinale d'une structure d'entrée d'air selon l'art antérieur
- les figures 2 à 5 sont des représentations schématiques en coupe longitudinale de variantes de réalisation de structures d'entrée d'air selon l'invention.

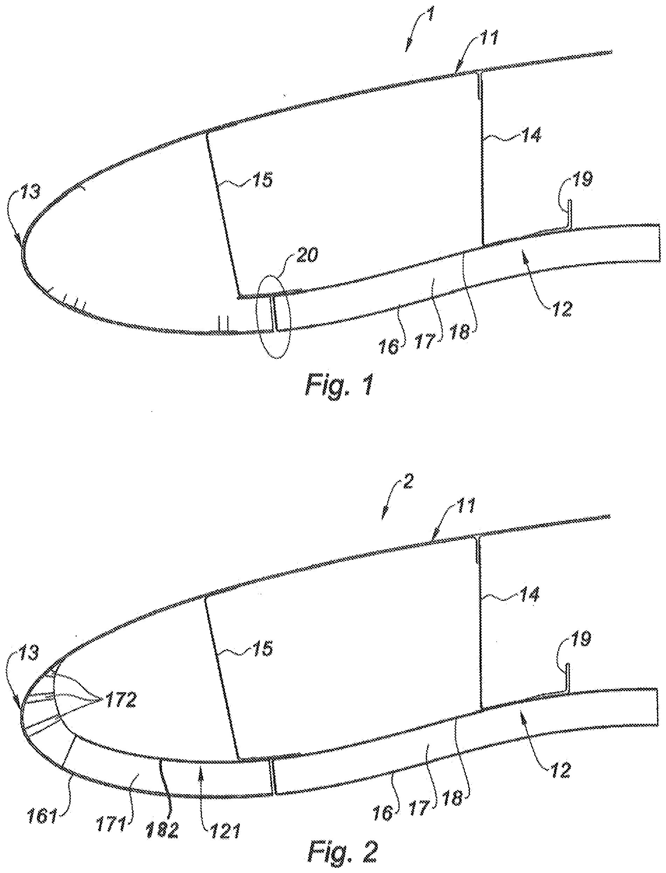

Comme représenté sur la figure 1, une structure d'entrée d'air 1 selon l'art antérieur présente une structure sensiblement annulaire comprenant une paroi externe 11, destinée à assurer la continuité aérodynamique externe avec le reste de la nacelle en aval (non représenté) et une paroi interne 12 destinée à assurer la continuité aérodynamique interne de la nacelle avec un carter de soufflante.

La paroi externe 11 et la paroi interne 12 sont reliées en amont par une paroi de lèvre d'entrée d'air 13 formant un bord d'attaque de la nacelle.

Le maintien intérieur des différentes parois 11, 12, 13 s'effectue à l'aide de cloisons. On compte notamment une cloison aval 14 sensiblement à proximité d'une liaison avec le carter de soufflante et une cloison amont 15 sensiblement au niveau des jonctions entre la paroi de lèvre d'entrée d'air 13 et les parois interne 12 et externe 11. Le nombre de cloisons, 2 dans ce mode de réalisation de l'invention n'est nullement restrictif. L'invention peut être réalisée avec tout nombre de cloison, voire sans cloison.

La paroi interne 12 est équipée d'une structure d'atténuation acoustique comprenant une peau acoustique externe 16, percée et orientée vers l'extérieur de la structure de manière à être exposée au flux d'air, une âme alvéolaire 17 formant résonateur, et une peau arrière 18, ou « backskin », pleine (non perforée).

La paroi de lèvre d'entrée d'air 13 n'est pas équipée de structure d'atténuation acoustique et est simplement réalisée à partir d'une peau pleine.

Selon ce mode de réalisation de l'art antérieur, la peau arrière 18 de la structure d'atténuation acoustique est structurale et travaillante. Elle permet notamment le transfert et la reprise d'efforts vers le carter de soufflante par l'intermédiaire d'une bride de rattachement 19.

La reprise des efforts depuis la paroi de lèvre d'entrée d'air peut se faire par l'intermédiaire de la peau acoustique 16, rendue alors structurale et travaillante, ou par le biais d'une manivelle réorientant le chemin d'efforts vers la peau arrière 18. En tout état de cause, il existe une zone 20 formant un noeud structural entraînant une perte de surface acoustique.

Les figures 2 à 5 présentent différents mode de réalisation de structures d'entrée d'air 2 à 5 selon l'invention.

La structure d'entrée d'air 2 selon l'invention diffère de la structure d'entrée d'air 1 selon l'art antérieur par le fait que la lèvre d'entrée d'air est équipée d'une structure d'atténuation acoustique 121 possédant une peau acoustique percée 161 et une âme alvéolaire 171.

Conformément à l'invention, la structure d'atténuation acoustique 121 possède également une peau arrière 182 pleine et structurale alignée avec la peau arrière 18 de la première structure d'atténuation acoustique et assurant donc le transfert des efforts entre la lèvre d'entrée d'air et la paroi interne 12.

Comme représenté sur la figure 2, la deuxième structure d'atténuation acoustique 121 se prolonge le long de la paroi d'entrée d'air 13 au niveau d'une zone de bord d'attaque présentant une forte courbure.

Dans une telle zone à forte courbure, il est difficile de mettre en forme correspondante une âme alvéolaire unique.

Aussi, il est possible de réaliser l'âme alvéolaire 171 en plusieurs segments discontinus, chaque présentant une courbure appropriée. Les différents segments pourront être implantés à l'aide de plots de fixation 172 de nid d'abeille.

Plus précisément, on notera que dans la zone de bord d'attaque de la lèvre d'entrée d'air 13, l'épaisseur de la structure d'atténuation acoustique 121 décroit progressivement jusqu'à ce que la peau arrière 182 rejoigne la paroi 13.

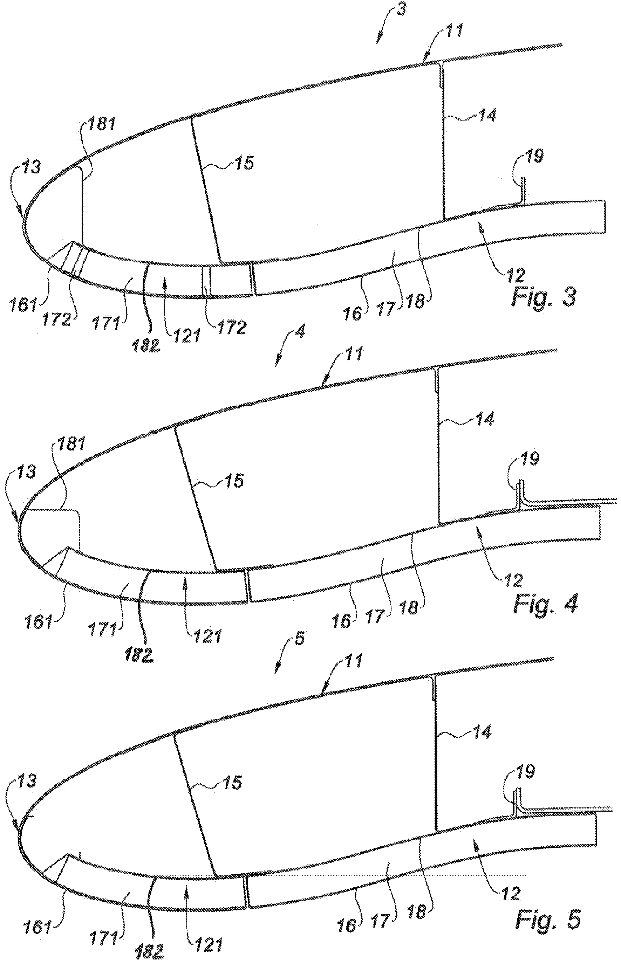

Les figures 3 et 4 montrent des structures d'entrée d'air 3, 4 dans lesquelles la structure d'atténuation acoustique 121 de la lèvre d'entrée d'air est maintenue à l'aide d'un gousset 181.

Si la structure alvéolaire le permet, et comme représenté sur la figure 5, une partie des efforts peuvent être repris et transférés à la peau arrière 182 par cisaillement à travers l'âme alvéolaire 171.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Structure d'entrée d'air (2, 3, 4, 5) pour nacelle de turboréacteur comprenant une structure principale sensiblement annulaire présentant une paroi interne (12), une paroi externe (11) et une structure de lèvre d'entrée d'air (13) reliant en amont lesdites parois externe et interne, une première structure d'atténuation acoustique présentant une peau acoustique percée (16), une âme alvéolaire (17), et une peau arrière (18) pleine équipant ladite paroi interne, et une deuxième structure d'atténuation acoustique (121) présentant une architecture similaire équipant une partie de la lèvre d'entrée d'air sensiblement à proximité d'une jonction avec la paroi interne, la peau arrière de la première structure acoustique est alignée avec celle (182) de la deuxième structure acoustique, ladite peau arrière étant par ailleurs structurale et assurant le transfert des efforts entre la lèvre d'entrée d'air (13) et la paroi interne (12), **caractérisée en ce que** dans la zone de bord d'attaque, la deuxième structure acoustique (121) présente une âme alvéolaire discontinue réalisée à partir de plusieurs sections disposées suivant la direction longitudinale de la structure d'entrée d'air présentant chacune une courbure appropriée.

2. Structure d'entrée d'air (2, 3, 4, 5) selon la revendication 1, **caractérisé en ce que** la lèvre d'entrée d'air (13) est intégrée à la paroi externe (11).

3. Structure d'entrée d'air (2) selon l'une quelconque des revendications 1 ou 2, **caractérisée en ce que** la deuxième structure acoustique (121) se prolonge le long de la structure d'entrée d'air au niveau d'une zone de bord d'attaque à forte courbure de la lèvre d'entrée d'air (13).

4. Structure d'entrée d'air (2) selon la revendication 3, **caractérisée en ce que** dans la zone de bord d'attaque, l'épaisseur de la deuxième structure acoustique (121) décroit progressivement.

5. Structure d'entrée d'air (2) selon la revendication 4, **caractérisée en ce que** la deuxième structure d'atténuation acoustique (121) décroit jusqu'à ce que la peau arrière (182) pleine rejoigne une paroi externe (13) de la structure d'entrée d'air.

6. Structure d'entrée d'air (2) selon l'une quelconque des revendications 3 à 5, **caractérisé en ce que** dans la zone de bord d'attaque, l'âme alvéolaire (171) de la deuxième structure acoustique (121) est maintenue à l'aide de plots (172) de nids d'abeille.

7. Structure (3, 4) selon l'une quelconque des revendications 1 à 6 **caractérisée en ce que** la structure d'entrée d'air comprend au moins un gousset (181) structural associé à la peau arrière de la deuxième structure acoustique.

8. Nacelle de turboréacteur, **caractérisée en ce qu'**elle comprend une structure d'entrée d'air (2, 3, 4, 5) selon l'une quelconque des revendications 1 à 7.

## Patentansprüche

1. Lufteinlassstruktur (2, 3, 4, 5) für eine Turbotriebwerksgondel, eine im Wesentlichen ringförmige Hauptstruktur umfassend, die eine Innenwand (12), eine Außenwand (11) und eine Lufteinlasslippenstruktur (13) aufweist, die stromaufwärts die besagte Außen- und Innenwand verbindet, eine erste Schalldämpfungsstruktur, die eine gelochte Schallschutzhülle (16), einen Wabenkern (17) und eine rückwärtige volle Hülle (18) aufweist, mit der die besagte Innenwand bestückt ist, sowie eine zweite Schalldämpfungsstruktur (121), die eine ähnliche Architektur aufweist und einen Teil der Lufteinlasslippe im Wesentlichen in der Nähe einer Verbindung mit der Innenwand bestückt, wobei die rückwärtige Hülle der ersten Schalldämpfungsstruktur mit jener (182) der zweiten Schalldämpfungsstruktur fluchtet, wobei die besagte rückwärtige Hülle darüber hinaus strukturell ist, und für die Übertragung der Kräfte zwischen der Lufteinlasslippe (13) und der Innenwand (12) sorgt, **dadurch gekennzeichnet, dass** in der Vorderkantenzone die zweite Schalldämpfungsstruktur (121) einen diskontinuierlichen Wabenkern aufweist, der sich aus mehreren Sektionen zusammensetzt, die in Längsrichtung der Lufteinlassstruktur angeordnet sind, wobei jede eine geeignete Krümmung aufweist.

2. Lufteinlassstruktur (2, 3, 4, 5) nach Anspruch 1, **dadurch gekennzeichnet, dass** die Lufteinlasslippe (13) in die Außenwand (11) integriert ist.

3. Lufteinlassstruktur (2) nach einem der Ansprüche 1 oder 2, **dadurch gekennzeichnet, dass** sich die zweite Schalldämpfungsstruktur (121) entlang der Lufteinlassstruktur im Bereich einer Vorderkantenzone mit starker Krümmung der Lufteinlasslippe (13) fortsetzt.

4. Lufteinlassstruktur (2) nach Anspruch 3, **dadurch gekennzeichnet, dass** in der Vorderkantenzone die Dicke der zweiten Schalldämpfungsstruktur (121) fortschreitend abnimmt.

5. Lufteinlassstruktur (2) nach Anspruch 4, **dadurch gekennzeichnet, dass** die zweite Schalldämpfungsstruktur (121) kleiner wird, bis die rückwärtige volle Hülle (182) eine Außenwand (13) der Lufteinlassstruktur erreicht.

6. Lufteinlassstruktur (2) nach einem der Ansprüche 3 bis 5, **dadurch gekennzeichnet, dass** in der Vorderkantenzone der Wabenkern (171) der zweiten Schalldämpfungsstruktur (121) mithilfe von wabenförmigen Klötzen (172) gehalten wird.

7. Struktur (3, 4) nach einem der Ansprüche 1 bis 6, **dadurch gekennzeichnet, dass** die Lufteinlassstruktur zumindest ein Struktur-Knotenblech (181) umfasst, das der rückwärtigen Hülle der zweiten Schalldämpfungsstruktur zugeordnet ist.

8. Turbotriebwerksgondel, **dadurch gekennzeichnet, dass** sie eine Lufteinlassstruktur (2, 3, 4, 5) nach einem der Ansprüche 1 bis 7 umfasst.

## Claims

1. An air inlet structure (2, 3, 4, 5) for a turbojet engine nacelle comprising a substantially annular main structure having an inner wall (12), an outer wall (11) and an air inlet lip structure (13) connecting said outer and inner walls upstream, a first acoustic attenuation structure having a pierced acoustic skin (16), a cellular core (17), and a solid rear skin (18) equipping said inner wall, and a second acoustic attenuation structure (121) having a similar architecture equipping a portion of the air inlet lip substantially near a junction with the inner wall, the rear skin of the first acoustic structure is aligned with the rear skin (182) of the second acoustic structure, said rear skin being, moreover, structural and ensuring the transfer of forces between the air inlet lip (13) and the inner wall (12), **characterized in that** in the leading edge area, the second acoustic structure (121) have a discontinuous cellular core made of several sections disposed along the longitudinal direction of the air inlet structure, each having an appropriate curvature.

2. The air inlet structure (2, 3, 4, 5) according to claim 1, **characterized in that** the air inlet lip (13) is integrated into the outer wall (11).

3. The air inlet structure (2) according to any one of claims 1 or 2, **characterized in that** the second acoustic structure (121) extends along the air inlet structure at a leading edge area with great curvature of the air inlet lip (13).

4. The air inlet structure (2) according to claim 3, **characterized in that** in the leading edge area, the thickness of the second acoustic structure (121) progressively decreases.

5. The air inlet structure (2) according to claim 4, **characterized in that** the second acoustic attenuation structure (121) decreases until that the solid rear skin (182) joins an outer wall (13) of the air inlet structure.

6. The air inlet structure (2) according to any one of claims 3 to 5, **characterized in that** in the leading edge area, the cellular core (171) of the second acoustic structure (121) is held by means of honeycomb studs (172).

7. The structure (3, 4) according to any one of claims 1 to 6, **characterized in that** the air inlet structure comprises at least one structural gusset (181) associated with the rear skin of the second acoustic structure.

8. A turbojet engine nacelle, **characterized in that** it comprises an air inlet structure (2, 3, 4, 5) according to any one of claims 1 to 7.
